# EUROPEAN PATENT SPECIFICATION

(11) **EP 4 108 317 B1**
(45) Date of publication and mention of the grant of the patent: **08.10.2025**
(21) Application number: 22165726.5
(22) Date of filing: 31.03.2022
(51) Int. Cl.: B01D 53/62

(54) **AN AIR PURIFIER COMPRISING A PELTIER MODULE**
LUFTREINIGER MIT EINEM PELTIER-MODUL
PURIFICATEUR D'AIR COMPRENANT UN MODULE PELTIER

(30) Priority: 25.06.2021 TR 202110431
(43) Date of publication of application: 28.12.2022
(73) Proprietor: Arçelik Anonim Sirketi, 34445 Istanbul (TR)
(72) Inventor: KAYA, Unsal, 34445 ISTANBUL (TR); YAVUZ, Pinar, 34445 ISTANBUL (TR); ERDOGAN, Koray, 34445 ISTANBUL (TR); KAYISDAG, Varol, 34445 ISTANBUL (TR); OZTURK, Tansel, 34445 ISTANBUL (TR); ULE, Ozan, 34445 ISTANBUL (TR)

(56) References cited:
- EP-A1- 3 842 124
- KR-A- 20210 006 233
- US-A1- 2018 085 706
- US-A1- 2019 078 780

## Description

The present invention relates to an air purifier wherein the ambient air is purified by processing the carbon dioxide in the air with basic and acidic solutions, respectively, and adsorbing the carbon dioxide and wherein any water loss in the basic solution required for the operation of the purifier is prevented.

In the air purifier of the present invention, the carbon dioxide in the air is sucked by means of a pump into a receptacle which is disposed in the body of the purifier and which contains a basic solution or which is suitable for receiving a basic solution. In this receptacle, the carbon dioxide in the air and the basic solution react and the carbon dioxide is adsorbed in the form of a carbonate solution, and the clean air is released back to the closed environment such as room, building, etc. through an air outlet. The carbon dioxide adsorbed in the form of a carbonate solution is required to be released again in order to be discharged out of the environment through another air outlet. Moreover, the basic solution converted into a carbonate is required to be used again in the new air purification cycles. To this end, the carbonate solution react with any acidic solution and the carbon dioxide is released again. At least one pump is used to suck air into the receptacle where the basic solution and the air react, or to transfer fluids such as solutions and air in the body of the purifier. During the transfer of such fluids, the solutions may remain on the surfaces of the pipes by clinging onto the surface as liquid droplets, or evaporate as much smaller particles so as to be discharged in the clean air. This situation causes the solution or just water in the basic solution required for the air purification by the purifier to be lost and the purifier to become inoperable. Therefore, the recovery of the basic solution liquid lost during operation is required for the purifier to continue to operate. Moreover, the vapor of the water in the basic solution may be discharged together with the clean air, and this causes the water in the purifier to be lost.

The state of the art United States of America Patent Document No. US10730364B2 discloses that the humidity in the air is retained and removed by means of a Peltier module disposed in a container.

In the state of the art Korean Patent Document No. KR20200020211A, a Peltier module is disclosed, which provides the dehumidification of the air and which comprises at least one air passage hole.

In the state of the art US Patent Application Document No: US2018085706 , an equipment designed to remove harmful airborne substances such as volatile chemicals, gases and/or particulates from indoor air is described.

The aim of the present invention is the realization of an air purifier wherein water can be supplied to the purifier such that the loss of basic solution required for the purification of air is prevented and the amount of solution is kept at a minimum amount predetermined by the manufacturer, which is required for the operation of the purifier.

The air purifier of the present invention comprises at least one Peltier receptacle and at least one droplet retainer and is defined by claim 1.

The Peltier receptacle condenses and retains the vapor in the clean air while the droplet retainer collects the basic liquid solution flowing to the pipes from the CO₂ adsorption unit and sends the same back to the CO₂ adsorption unit.

The air purifier of the present invention further comprises a water reservoir which enables the filling of water in order to ensure the operation of the purifier when the Peltier receptacle cannot condense enough vapor or the droplet retainer cannot retain enough liquid solution. The user can add water from said water reservoir to the CO₂ adsorption unit when needed.

The amount of water required for the operation of the purifier is predetermined by the manufacturer. If said amount in the basic solution decreases in the purifier, the control unit warns the user audibly or visually by means of a display.

The Peltier receptacle, the droplet retainer and the water reservoir are connected to the CO₂ adsorption unit by means of pipes comprising at least one delivery member such as check valve, solenoid valve or pump. Thus, there is no liquid leak from the CO₂ adsorption unit to the Peltier receptacle, the droplet retainer and the water reservoir, and there is a one-way transfer from the Peltier receptacle, the droplet retainer and the water reservoir to the CO₂ adsorption unit.

In an embodiment of the present invention, the CO₂ adsorption unit contains the basic solution filled by the manufacturer, and in another embodiment, the basic solution is drawn from an external basic solution tank in the body by the pump to the CO₂ adsorption unit before the air purification process. Therefore, any receptacle where the air and the basic solution mix and react can be the CO₂ adsorption unit.

In an embodiment of the present invention, the air and the basic solution are mixed as micro bubbles in order to increase the efficiency of the reaction in the CO₂ adsorption unit. By means of the micro holes on the membrane diffusers placed into the CO₂ adsorption unit, the air is supplied into the basic solution at a certain pressure and they mix as bubbles.

By means of the present invention, the air purifier is enabled to operate continuously by keeping the water amount in the basic solution required for removing the carbon dioxide in the air at the minimum amount predetermined by the manufacturer.

The model embodiments that relate to the air purifier realized in order to attain the aim of the present invention are illustrated in the attached figures, where:

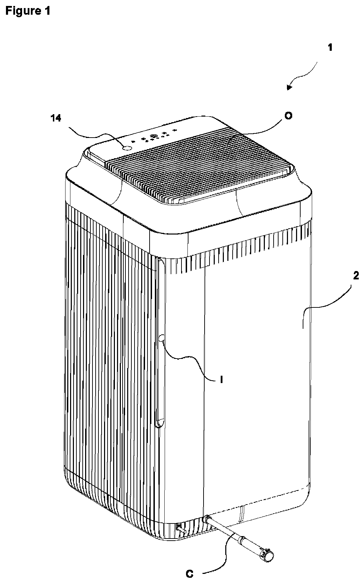

**Figure 1** - is the perspective view of the air purifier in an embodiment of the present invention.

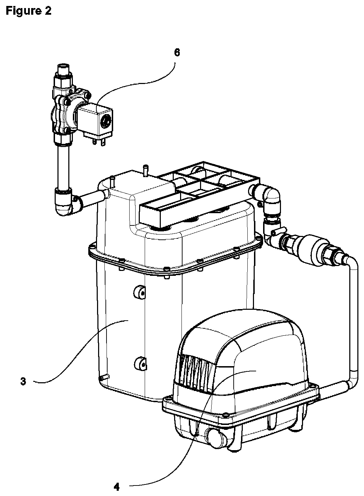

**Figure 2** **-** is the view of the pump and the CO₂ adsorption unit in the air purifier in an embodiment of the present invention.

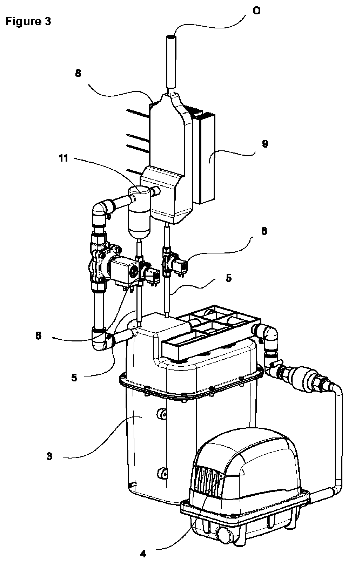

**Figure 3** **-** is the perspective view showing the components in the body in the air purifier in an embodiment of the present invention.

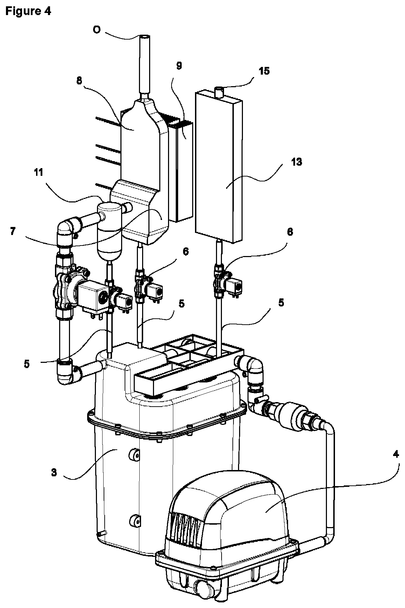

**Figure 4** **-** is the perspective view showing the components in the body in the air purifier in another embodiment of the present invention.

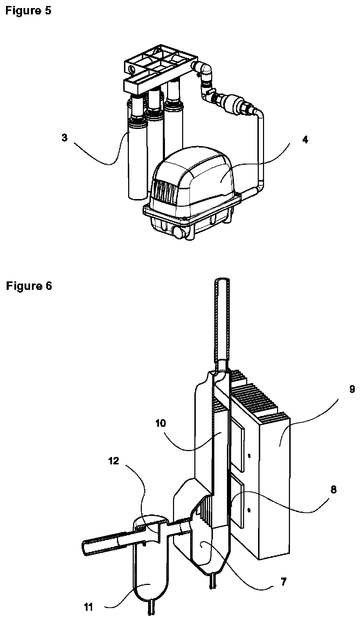

**Figure 5** **-** is the view showing the membrane diffusers in the CO₂ adsorption unit in the air purifier in an embodiment of the present invention.
**Figure 6** **-** is the cross-sectional view of the droplet retainer, the Peltier receptacle and the Peltier module in Figure 2 and Figure 4.

The elements illustrated in the figures are numbered as follows:
1. Air purifier
2. Body
3. CO₂ adsorption unit
4. Pump
5. Pipe
6. Delivery member
7. Peltier receptacle
8. Peltier module
9. Hot heat sink
10. Cold heat sink
11. Droplet retainer
12. Wall
13. Water reservoir
14. Control unit
15. Lid
I: Air inlet
O: Clean air outlet
C: CO₂ outlet

The air purifier (1) comprises a body (2) having an air inlet (I) through which the ambient air is sucked, a clean air outlet (O) through which the cleaned air is released to the environment and a CO₂ outlet (C) through which the carbon dioxide separated from the air is discharged to the outside; a CO₂ adsorption unit (3) which enables the carbon dioxide in the air to be processed with a basic solution so as to be converted to carbonate solution and chemically adsorbed; at least one pipe (5) which provides the transfer of air and solution in the body (2); and a pump (4) which pumps the air in the environment into the CO₂ adsorption unit (3).

The air purifier (1) of the present invention comprises a Peltier receptacle (7) which condenses and collects the water vapor released with the clean air from the CO₂ adsorption unit (3) and mixing into the air during the air purification process and a droplet retainer (11) which collects the basic solution droplets overflowing from the CO₂ adsorption unit (3) during the air purification process.

In the air purifier (1) of the present invention, the air in an environment such closed room, office, etc. is sucked into the body (2) by means of a pump (4). The air sucked is delivered into the CO₂ adsorption unit (3). The CO₂ adsorption unit (3) may contain a basic solution filled by the manufacturer or the basic solution can be delivered to the CO₂ adsorption unit (3) from a base receptacle filled with the basic solution in advance by the manufacturer when the air purifier (1) starts to operate. In the CO₂ adsorption unit (3), the basic solution and the carbon dioxide in the air react and thus the carbon dioxide is adsorbed. The bubbles formed while pumping air into the basic solution may overflow from the CO₂ adsorption unit (3). Moreover, the water vapor in the clean air sent from the CO₂ adsorption unit (3) towards the clean air outlet (O) may be the water evaporating from the solution. These losses in the CO₂ adsorption unit (3) can be retained by at least one Peltier receptacle (7) and/or at least one droplet retainer (11) and recovered by the purifier (1). The Peltier receptacle (7) condenses the water vapor in the clean air and collects the water. The droplet retainer (11) is a receptacle which collects the basic solution overflowing directly from the CO₂ adsorption unit (3). In the air purifier (1) of the present invention, the Peltier receptacle (7) and the droplet retainer (11) can be used separately or both at the same time. In case both are used at the same time, it is advantageous in that the basic liquid solution can be collected in a separate receptacle and the clean water vapor is collected in a separate receptacle.

In an embodiment of the present invention, the air purifier (1) comprises a Peltier module (8) having a cold heat sink (10) and a hot heat sink (9) which provide the condensation of the water vapor in the air in the Peltier receptacle (7).

In an embodiment of the present invention, the air purifier (1) comprises a Peltier receptacle (7) which is manufactured from a material resistant to corrosion and which collects the basic solution droplets overflowing from the CO₂ adsorption unit (3) during the air purification process.

The material resistant to corrosion can be one of anodized, Aluminum oxide coating on Aluminum, Teflon coating on Aluminum, stainless steel or EPDM.

In the present invention, the air purifier (1) comprises a droplet retainer (11) which has a wall (12) that the solution droplets overflowing from the CO₂ adsorption unit (3) during the air purification process hit to flow downwards, and which is placed before the Peltier receptacle (7) in the flow direction of the clean air towards the clean air outlet (O). Thus, the basic solution droplets hit the wall (12) and are collected towards the bottom in the droplet retainer (11), and the clean air flows towards the Peltier receptacle (7). Thus, the Peltier receptacle (7) provides only the condensation of the water vapor in the clean air, and is not damaged by the basic solution.

In the present invention, the air purifier (1) comprises the Peltier receptacle (7) and the droplet retainer (11) which is connected to the CO₂ adsorption unit (3) by means of the pipe (5) comprising a delivery member (6) such as check valve or solenoid valve. Thus, the liquids in the Peltier receptacle (7) and/or the droplet retainer (11) are delivered to the CO₂ adsorption unit in a one-way flow. Liquid flow from the CO₂ adsorption unit (3) to the Peltier receptacle and/or the droplet retainer (11) is prevented.

In an embodiment of the present invention, the air purifier ( 1) comprises a water reservoir (13) which enables the user to add water to the CO₂ adsorption unit (3). Thus, the user can add from the outside when needed or when the water of the solution in the CO₂ adsorption unit (3) decreases.

In an embodiment of the present invention, the air purifier (1) comprises the water reservoir (13) having a lid (15) which can be opened/closed so as to provide access to the user from the outside. By mens of the lid (15), the water in the reservoir (13) is prevented from spilling in situations such as the tipping over of the purifier (1).

In an embodiment of the present invention, the air purifier (1) comprises the water reservoir (13) which is connected to the CO₂ adsorption unit (3) by means of the pipe (5) comprising a delivery member (6) such as check valve or solenoid valve.

In an embodiment of the present invention, the air purifier (1) comprises a control unit (14) which enables the air to be drawn from the pump (4) to be delivered to the Peltier receptacle (7) when air is not pumped to the CO₂ adsorption unit (4) by means of the pump (4), and which enables the water obtained from the vapor in the air by being condensed in the Peltier receptacle (7) to be delivered to the CO₂ adsorption unit (3). Thus, the humidity in the ambient air is converted into water and can be filled into the CO₂ adsorption unit (3) when needed.

By means of the present invention, an air purifier (1) is realized, wherein the basic solution in the CO₂ adsorption unit (3) is kept at a concentration required to adsorb the carbon dioxied in the air.

## Claims

1. An air purifier (1) comprising a body (2) having an air inlet (I) through which the ambient air is sucked, a clean air outlet (O) through which the cleaned air is released to the environment, the air purifier (1) being suitable to enable the carbon dioxide in the air to be adsorbed in the form of carbonate solution and suitable to enable the carbonate solution to be reacted with an acidic solution; a CO₂ outlet (C) suitable to discharge the carbon dioxide released from the carbonate solution reacting with the acidic solution to the outside; a CO₂ adsorption unit (3) which is suitable to enable the carbon dioxide in the air to be processed with a basic solution so as to be converted to carbonate solution and chemically adsorbed; at least one pipe (5) which is suitable to provide the transfer of air and solution in the body (2); and a pump (4) which is suitable to pump the air in the environment into the CO₂ adsorption unit (3), **characterized by** a Peltier receptacle (7) which is suitable to condense and collect the water vapor released with the clean air from the CO₂ adsorption unit (3) and mixing into the air during the air purification process and a droplet retainer (11) which is suitable to collect the basic solution droplets overflowing from the CO₂ adsorption unit (3) during the air purification process and which has a wall (12) that the solution droplets overflowing from the CO2 adsorption unit (3) during the air purification process hit to flow downwards, and which is placed before the Peltier receptacle (7) in the flow direction of the clean air towards the clean air outlet (O).

2. An air purifier (1) as in Claim 1, **characterized by** a Peltier module (8) having a cold heat sink (10) and a hot heat sink (9) which provide the condensation of the water vapor in the air in the Peltier receptacle (7).

3. An air purifier (1) as in Claim 1 or 2, **characterized by** a Peltier receptacle (7) which is manufactured from a material resistant to corrosion and which collects the basic solution droplets overflowing from the CO₂ adsorption unit (3) during the air purification process.

4. An air purifier (1) as in any one of the above claims, **characterized by** the Peltier receptacle (7) and/or the droplet retainer (11) which is connected to the CO₂ adsorption unit (3) by means of the pipe (5) comprising a delivery member (6) such as check valve or solenoid valve.

5. An air purifier (1) as in any one of the above claims, **characterized by** a water reservoir (13) which enables the user to add water to the CO₂ adsorption unit (3).

6. An air purifier (1) as in Claim 5, **characterized by** the water reservoir (13) having a lid (15) which can be opened/closed so as to provide access to the user from the outside.

7. An air purifier (1) as in Claim 5 or 6, **characterized by** the water reservoir (13) which is connected to the CO₂ adsorption unit (3) by means of the pipe (5) comprising a delivery member (6) such as check valve or solenoid valve.

8. An air purifier (1) as in any one of the above claims, **characterized by** a control unit (14) which enables the air to be drawn from the pump (4) to be delivered to the Peltier receptacle (7) when air is not pumped to the CO₂ adsorption unit (4) by means of the pump (4), and which enables the water obtained from the vapor in the air by being condensed in the Peltier receptacle (7) to be delivered to the CO₂ adsorption unit (3).

## Patentansprüche

1. Ein Luftreiniger (1) umfasst einen Körper (2) mit einem Lufteinlass (I), durch den die Umgebungsluft angesaugt wird, einen Reinluftauslass (O), durch den die gereinigte Luft an die Umgebung abgegeben wird, und der Luftreiniger (1) ist geeignet, um das Kohlendioxid in der Luft mit einer basischen Lösung zu behandeln, so dass es in eine Karbonatlösung umgewandelt und chemisch adsorbiert wird, und geeignet, um die Karbonatlösung mit einer sauren Lösung reagieren zu lassen; einen CO₂-Auslass (C), der geeignet ist, das aus der Karbonatlösung freigesetzte Kohlendioxid, wenn es mit der sauren Lösung reagiert, nach außen abzugeben; mindestens ein Rohr (5), das geeignet ist, den Transfer von Luft und Lösung im Körper (2) zu gewährleisten; und eine Pumpe (4), die geeignet ist, die Luft in der Umgebung in eine CO2-Adsorptionseinheit (3) zu pumpen, **gekennzeichnet durch** einen Peltier-Behälter (7), der geeignet ist, den mit der sauberen Luft aus der CO2-Adsorptionseinheit (3) freigesetzten Wasserdampf zu kondensieren und zu sammeln und während des Luftreinigungsprozesses mit der Luft zu vermischen, und einen Tropfenauffangbehälter (11), der dazu geeignet ist, die während des Luftreinigungsprozesses aus der CO2-Adsorptionseinheit (3) überlaufenden Basislösungströpfchen zu sammeln, und der eine Wand (12) aufweist, auf die die während des Luftreinigungsprozesses aus der CO2-Adsorptionseinheit (3) überlaufenden Lösungströpfchen auftreffen, um nach unten zu fließen, und der in Strömungsrichtung der sauberen Luft zum Auslass für saubere Luft vor dem Peltier-Behälter (7) angeordnet ist (O) angeordnet ist.

2. Ein Luftreiniger (1), wie in Anspruch 1 aufgeführt, ist **dadurch gekennzeichnet, dass** ein Peltier-Modul (8) mit einem kalten Kühlkörper (10) und einem heißen Kühlkörper (9) die Kondensation des Wasserdampfs in der Luft im Peltier-Behälter (7) bewirkt.

3. Ein Luftreiniger (1), wie in Anspruch 1 oder 2 aufgeführt, ist **dadurch gekennzeichnet, dass** ein Peltier-Behälter (7), der aus einem korrosionsbeständigen Material hergestellt ist und die während des Luftreinigungsprozesses aus der CO2-Adsorptionseinheit (3) überlaufenden Tropfen der Basislösung auffängt.

4. Ein Luftreiniger (1), wie in einem der vorherigen Ansprüchen aufgeführt, ist **dadurch gekennzeichnet, dass** der Peltier-Behälter (7) und/oder der Tropfenauffangbehälter (11), der über das Rohr (5) mit der CO2-Adsorptionseinheit (3) verbunden ist, ein Förderelement (6) wie beispielsweise ein Rückschlagventil oder ein Magnetventil umfasst.

5. Ein Luftreiniger (1), wie in einem der vorherigen Ansprüchen aufgeführt, ist **dadurch gekennzeichnet, dass** ein Wasserbehälter (13) vorhanden ist, der es dem Benutzer ermöglicht, Wasser in die CO2-Adsorptionseinheit (3) einzufüllen.

6. Ein Luftreiniger (1), wie in Anspruch 5 aufgeführt, ist **dadurch gekennzeichnet, dass** der Wasserbehälter (13) einen Deckel (15) aufweist, der geöffnet/geschlossen werden kann, um dem Benutzer von außen Zugang zu gewähren.

7. Ein Luftreiniger (1), wie in Anspruch 5 oder 6 aufgeführt, ist **dadurch gekennzeichnet, dass** der Wasserbehälter (13), der über die Leitung (5) mit der CO2-Adsorptionseinheit (3) verbunden ist, ein Förderelement (6) wie beispielsweise ein Rückschlagventil oder ein Magnetventil umfasst.

8. Ein Luftreiniger (1), wie in einem der vorherigen Ansprüchen aufgeführt, ist **dadurch gekennzeichnet, dass** eine Steuereinheit (14) vorgesehen ist, die es ermöglicht, die von der Pumpe (4) angesaugte Luft dem Peltier-Behälter (7) zuzuführen, wenn keine Luft mittels der Pumpe (4) zur CO2-Adsorptionseinheit (4) gepumpt wird, und die es ermöglicht, dass das aus dem Wasserdampf in der Luft durch Kondensation im Peltier-Behälter (7) gewonnene Wasser der CO2-Adsorptionseinheit (3) zugeführt wird.

## Revendications

1. Purificateur d'air (1) comprenant un corps (2) doté d'une entrée d'air (I) par laquelle l'air ambiant est aspiré, une sortie d'air propre (O) par laquelle l'air purifié est libéré dans l'environnement, et le purificateur d'air (1) qui est adapté pour permettre au dioxyde de carbone dans l'air d'être traité avec une solution basique afin d'être converti en une solution de carbonate et adsorbé chimiquement, et adapté pour permettre à la solution de carbonate de réagir avec une solution acide ; une sortie de CO₂ (C) adaptée pour évacuer le dioxyde de carbone libéré par la solution de carbonate lorsqu'elle réagit avec la solution acide vers l'extérieur ; au moins un tuyau (5) adapté pour assurer le transfert d'air et de solution dans le corps (2) ; et une pompe (4) adaptée pour pomper l'air de l'environnement vers une unité d'adsorption de CO₂ (3), **caractérisé par** un réceptacle Peltier (7) adapté pour condenser et collecter la vapeur d'eau libérée avec l'air propre depuis l'unité d'adsorption de CO₂ (3) et se mélangeant à l'air pendant le processus de purification de l'air, et un dispositif de retenue de gouttelettes (11) adapté pour collecter les gouttelettes de solution basique débordant de l'unité d'adsorption de CO₂ (3) pendant le processus de purification de l'air, et qui comporte une paroi (12) que les gouttelettes de solution débordant de l'unité d'adsorption de CO₂ (3) pendant le processus de purification de l'air heurtent pour s'écouler vers le bas, et qui est placé avant le réceptacle Peltier (7) dans la direction du flux d'air pur vers la sortie d'air propre (O).

2. Purificateur d'air (1) selon la Revendication 1, **caractérisé par** un module Peltier (8) comportant un dissipateur thermique froid (10) et un dissipateur thermique chaud (9) qui permettent la condensation de la vapeur d'eau dans l'air dans le réceptacle Peltier (7).

3. Purificateur d'air (1) selon la Revendication 1 ou 2, **caractérisé par** un réceptacle Peltier (7) fabriqué à partir d'un matériau résistant à la corrosion et qui collecte les gouttelettes de solution basique débordant de l'unité d'adsorption de CO₂ (3) pendant le processus de purification de l'air.

4. Purificateur d'air (1) selon l'une quelconque des Revendications précédentes, **caractérisé par** le réceptacle Peltier (7) et/ou le dispositif de retenue de gouttelettes (11) qui est connecté à l'unité d'adsorption de CO₂ (3) par le tuyau (5) comprenant un élément de distribution (6) tel qu'un clapet anti-retour ou une électrovanne.

5. Purificateur d'air (1) selon l'une quelconque des Revendications précédentes, **caractérisé par** un réservoir d'eau (13) qui permet à l'utilisateur d'ajouter de l'eau à l'unité d'adsorption de CO₂ (3).

6. Purificateur d'air (1) selon la Revendication 5, **caractérisé par** le réservoir d'eau (13) comportant un couvercle (15) qui peut être ouvert/fermé pour permettre à l'utilisateur d'y accéder depuis l'extérieur.

7. Purificateur d'air (1) selon la Revendication 5 ou 6, **caractérisé par** le réservoir d'eau (13) qui est connecté à l'unité d'adsorption de CO₂ (3) par le tuyau (5) comprenant un élément de distribution (6) tel qu'un clapet anti-retour ou une électrovanne.

8. Purificateur d'air (1) selon l'une quelconque des Revendications précédentes, **caractérisé par** une unité de contrôle (14) qui permet à l'air aspiré par la pompe (4) d'être acheminé vers le réceptacle Peltier (7) lorsque l'air n'est pas pompé vers l'unité d'adsorption de CO₂ (3) par la pompe (4), et qui permet à l'eau obtenue à partir de la vapeur dans l'air par condensation dans le réceptacle Peltier (7) d'être acheminée vers l'unité d'adsorption de CO₂ (3).
